# EUROPEAN PATENT SPECIFICATION

(11) **EP 2 617 987 B1**
(45) Date of publication and mention of the grant of the patent: **30.04.2014**
(21) Application number: 12151928.4
(22) Date of filing: 20.01.2012
(51) Int. Cl.: F03D 1/00, B66C 23/18

(54) **Method and arrangement for installing a rotor blade**
Verfahren und Anordnung zur Montage eines Rotorblatts
Procédé et agencement pour l'installation d'une pale de rotor

(43) Date of publication of application: 24.07.2013
(73) Proprietor: Siemens Aktiengesellschaft, 80333 München (DE)
(72) Inventor: Falkenberg, Peter Loevenskjold, 7400 Herning (DK)

(56) References cited:
- DE-A1- 10 141 928
- DE-A1-102009 013 876
- US-A1- 2006 147 308

## Description

### Field of invention

The present invention relates to a method and to an arrangement for installing a rotor blade at a hub of a wind turbine, wherein the rotor blade is installed at a predetermined orientation.

### Art Background

For installing a wind turbine installation of one or more rotor blades to a rotation shaft of the wind turbine is required. The rotor blade may be installed at a particular angular position or orientation of the wind turbine blades, such that the rotor blades may for example be oriented horizontally or vertically aligned with their longitudinal axis. When the rotor blades are installed having a particular orientation (such as horizontally or vertically oriented with respect to their longitudinal axis) the hub of the wind turbine has to be turned or rotated for installation of each of the plural rotor blades, such as by 120° when three rotor blades are used in the wind turbine. This may be especially difficult, when a gearless direct drive wind turbine is installed. In this case, it may take a large torque to rotate the hub.

US 2006/0147308 A1 discloses a method for mounting rotor blades for a wind turbine, wherein the rotor hub is rotated into a predetermined first position, a rotor blade is fitted, the rotor hub is rotated by means of the rotor blade into a predetermined second position and a second rotor blade is mounted, wherein the rotation of the rotor hub is effected in the direction of the effect of gravitational force of the first rotor blade which is already mounted. Thereby, the rotor blades have at least one through hole which enables safe and secure handling of the rotor blade upon mounting thereof to a rotor hub.

Document DE 102009013876A discloses another method for installing rotor blades at a hub of a wind turbine.

There may be a need for a method and an arrangement for installing at least one rotor blade at a hub of a wind turbine, wherein modification of the rotor blade may not be required and wherein the method supports the installation of plural rotor blades, such as three rotor blades. Further, there may be a need for a simplified installation method.

Further, there may be a need for a method and an arrangement for installing a rotor blade, wherein the method or the arrangement is simplified, in particular not requiring a crane for rotating the hub into a number of predetermined positions for installing respective rotor blades.

### Summary of the Invention

This need may be met by the subject matter according to the independent claims. Advantageous embodiments of the present invention are described by the dependent claims.

According to an embodiment of the present invention, it is provided a method for installing at least one rotor blade at a hub of a wind turbine, the method comprising: attaching a lever having a first portion and a second portion at the hub by connecting the first portion to the hub, the second portion having a first force application region and a second force application region, wherein the first portion is selectively rotatably lockable and rotatably unlockable from the second portion; rotatably locking the first portion and the second portion; applying a force at the first force application region or the second force application region of the second portion of the lever, to rotate the hub into an angular position; and connecting the rotor blade at the hub rotated into the angular position.

The hub may comprise on or more connectors for connecting the rotor blades at the hub. The hub may be mechanically connected to a rotation shaft of the wind turbine, which is supported in a nacelle, which in turn may be rotatably supported relative to a rotating wind turbine tower. Thereby, the nacelle may be rotatable around a vertical axis for directing the rotor blades connected at the hub of the rotation shaft towards the wind.

By having the lever attached at the hub, a torque may be applied via applying a force to the first force application region and/or the second force application region, thereby rotating the hub together with the lever, if the first portion is rotatably locked relative to the second portion. Thereby, the force may be applied by drawing at a wire, which is attached at the first force application region and/or the second force application region. The wire may in particular be drawn, using a winch, which is located at the ground close to the base of the wind turbine tower.

The angular position may allow to connect the rotor blade at the hub, while the rotor blade is in a predetermined orientation, such as a horizontal orientation corresponding to a orientation of the rotor blade, in which a longitudinal axis of the rotor blade (a axis corresponding to the direction of maximal extent of the rotor blade) is horizontally oriented.

The rotor blade may be connected at the hub using one or more screws. While connecting the rotor blade at the hub, one or more rotor blades may already have been installed at the hub. Alternatively, the rotor blade may be first rotor blade to be connected at the hub, while no other rotor blade is connected to the hub.

Application of the force at the force application region and/or the second force application region may be accomplished by drawing at a wire attached to the first force application region and/or the second force application region, in particular by drawing at the wire using an apparatus installed at the ground. Thereby, a crane may not be required for turning the hub into the angular position. Thereby, the method may be simplified compared to a conventional method.

Further, rotor blades to be connected to the hub, do not require any modification, such as providing a hole or a connection region for connecting a wire, for turning or rotating the hub, using force or torque at one or more of the rotor blades. Thereby, the aerodynamic properties of the rotor blades may not be impaired.

Installing or connecting the rotor blades, while in a horizontal orientation, may also simplify the method, since the rotor blade may be lifted from the ground, where it may be in a horizontal orientation, up to the hub, where it is connected to the hub without changing substantially the orientation of the rotor blade. In particular, the rotor blade may be lifted using a clamp clamped at the rotor blade, wherein the clamp is fixed at the rotor blade using friction forces, thereby no modification of the rotor blade may be required.

According to an embodiment of the present invention, the first portion is arranged between the first force application region and the second force application region, wherein in particular a distance between the first portion and the first force application region, equals (at least approximately) a distance between the first portion and the second force application region.

In particular, the first portion is or may be connectable to the hub using one or more screws. Thereby, the first portion may comprise one or more through holes, through which one or more screws may be penetrated. In particular, the first portion may be or may comprise a circular disc having an outer edge, which may have a circular shape, which may be in slidable contact with a corresponding circular contact surface of the second portion, when the first portion and the second portion are rotatably unlocked relative to each other. In contrast, when the first portion and the second portion are rotatably locked relative to each other, the contact surface or contact area of the first portion may be in contact with the contact surface of the second portion but the two contact surfaces may not move relative to each other.

Adapting the lever such that the distance between the first portion and the first force application region equals a distance between the first portion and the second force application region, may enable to balance the second portion, when subjected to a gravitational force and may further enable to apply a torque by applying a force to the second force application region having a same magnitude as a torque generated by applying a force to the first force application region.

Thereby, rotating or turning the second portion relative to the first portion or turning or rotating the second portion and the first portion (rotatably locked relative to the second portion) together with the hub, may be simplified.

According to an embodiment of the present invention, the force is applied and/or the second portion is rotated relative to the first portion, without rotating the hub, when the first portion and the second portion are rotatably unlocked relative to each other and/or the first portion and the second portion are commonly rotated together with the hub, when the first portion and the second portion are rotatably locked relative to each other.

Thereby, by drawing at the first force application region and/or the second force application region, the second portion may be rotated or turned relative to the first portion (and also relative to the hub), when the first portion is rotatably unlocked relative to the second portion.

Further, by drawing at the first force application region and/or the second force application region, the hub may be turned or rotated, when the first portion is rotatably locked relative to the second portion. Thereby, performing the method may be simplified.

Further, it may be advantageous to generate the forces at a ground, thus at a position vertically below the hub, in order to turn the first portion relative to the second portion and/or to turn the hub, when the first portion is slidably or rotatably locked relative to the second portion.

Thereby, a crane or an apparatus for applying a force vertically above the hub may not be required.

According to an embodiment of the present invention the method further comprises rotatably unlocking the first portion and the second portion; rotating the second portion relative to the first portion and relative to the hub (without turning the hub); rotatably locking the first portion and the second portion; applying another force at the second portion of the lever, to rotate the hub into another angular position; connecting another rotor blade at the hub rotated into the other angular position.

Rotatably unlocking the first portion and the second portion enables to rotate the second portion relative to the first portion without rotating the hub. Thereby, the lever may be brought in a position or orientation which allows to apply a force or torque via the lever in a selective direction, when the first portion and the second portion are rotatably locked after having oriented the lever appropriately. Thereby, different angular positions of the hub may be effected or adjusted, such that the hub in particular may be rotated into the other angular position which is appropriate to mount the other rotor blade.

In particular, during orientation of all rotor blades they may be orientated such that their longitudinal axes are oriented horizontally. By unlocking the first portion and the second portion, rotating the second portion relative to the first portion, locking the first portion and the second portion and applying a force or another force at the second portion it may enabled to turn the hub into the angular position, into the other angular position and also into a further angular position, wherein the angular position, the other angular position and the further angular position are respective angular positions suited for mounting the rotor blade, the other rotor blade and the further rotor blade to the hub.

Further, plural other angular positions may be set using the lever to install even more rotor blades to the hub.

According to an embodiment of the present invention the method further comprises, in particular after locking the hub relative a nacelle, connecting a further rotor blade at the hub rotated into a further angular position; rotatably locking the first portion and the second portion; applying a further force at the second portion of the lever, to rotate the hub into an intermediate angular position (at which no rotor blade is mounted to the hub); rotatably unlocking the first portion and the second portion; rotating the second portion relative to the first portion and relative to the hub.

In particular, these additional method steps may be performed at the beginning of an installation procedure for installing a number of rotor blades, such as three rotor blades, to the hub. In particular, as a very first step, the hub may be locked relative to the nacelle, in order to avoid rotation of the hub when the further rotor blade is connected to the hub and when the gravitational weight of the further rotor blade tends to generate a torque which would turn the hub, if the hub would not be locked relative to the nacelle.

In particular, the lever may be attached to the hub at the very beginning of the installation procedure, such that a longitudinal axis of a bar of the lever is oriented at an angle of 45° (in particular pointing with its second portion transversely upwards) relative to the vertical direction. In particular, in this orientation the lever is suitably arranged to counteract a gravitational weight of the further rotor blade when the further rotor blade is lowered from a horizontal orientation to a vertical orientation by turning the hub about 90°. Thereby, in particular, the further force may be just as high as (or only slightly lower than) the gravitational force generated by the further rotor blade connected to the hub or may be slightly lower such as to enable slowly lowering the further rotor blade or turning it such as to reach the vertical orientation of its longitudinal axis. At this orientation the bar may be oriented having its longitudinal axis including an angle of 135° with the vertical direction wherein the force application region of the second portion may be vertically arranged lower than the first portion (such that the second portion transversely points downwards). In contrast, at the very beginning of the installation procedure the force application region of the second portion may be vertically arranged higher than the first portion of the lever.

In particular, the second portion may be rotated about 90° relative to the first portion, in the situation, when the first portion is unlocked from the second portion. Thereby, the lever may be arranged in a suitable position in order to apply an upwards force at the second portion of the lever to rotate the hub into the angular position at which then the rotor blade is connected at the hub.

According to an embodiment of the present invention a longitudinal axis of the blade, the other blade and/or the further blade is horizontally arranged when connecting the blade, the other blade and/or the further blade to the hub.

The longitudinal axis of the blade may be a direction on an axis along a maximal extent of the blade. Thereby a conventional orientation of installing rotor blades may be applied. In particular, a clamp may be used to lift the rotor blade (being in a horizontal orientation) from the ground towards the hub without requiring to change the orientation of the blade. Thereby, the method may be simplified.

It should be understood that features individually or in any combination disclosed, described and mentioned or applied for a method for installing at least one rotor blade at a hub of a wind turbine may also be applied to or used for or provided for (individually or in any combination) an arrangement for installing at least one rotor blade at a hub of a wind turbine according to an embodiment of the present invention and vice versa.

According to an embodiment of the present invention, it is provided an arrangement for installing at least one rotor blade at a hub of a wind turbine, the arrangement comprising: a lever having a first portion and a second portion, wherein the first portion is connectable to the hub, wherein the first portion is selectively rotatably lockable and rotatably unlockable relative to the second portion, the second portion having a first force application region and a second force application region (spaced apart form the first force application region), wherein the first force application region and the second force application region of the second portion of the lever are adapted for applying a force at the lever, when the first portion is rotatably locked relative to the second portion, to rotate the hub into an angular position.

The arrangement may further comprise a winch, which is adapted to draw at a wire, wherein the wire is attached or may be attached to the first force application region and/or the second force application region. In particular, the winch may be fixed at a foundation or a base, which is installed at the ground. Alternatively, the winch may be installed at a vehicle or a particular support structure, which is anchored at the ground.

The arrangement may further comprise a crane, which may have one or more wires for lifting the rotor blades, in particular using a clamp at the rotor blades.

According to an embodiment of the present invention the second portion comprises a bar between the first force application region and the second force application region, the bar having a length between 1 m and 50 m, further in particular between 2 m and 40 m.

The bar may provide an appropriate spacing between the first force application region and the second force application region. The length of the bar may be adapted depending on a longitudinal extent and/or weight of the rotor blades and may further be adapted according to torque required to turn the hub. Thereby, the required torque may be achievable using the lever having the bar of appropriate length.

According to an embodiment of the present invention, the first portion comprises a first contact region, wherein the second portion comprises a second contact region between the first force application region and the second force application region, wherein the first contact region is in contact with the second contact region. However the first portion may also separated from the second portion, when the lever is disassembled.

The first contact region may slide relative to the second contact region, when the first portion and the second portion are rotatably unlocked relative to each other. In particular, lubricant may be applied between the first contact region and the second contact region. Thereby, rotating the first portion relative to the second portion may be simplified by reducing friction between the first contact region and the second contact region.

According to an embodiment of the present invention, the first contact region and the second contact region form a pivot bearing. Thereby, when the first portion is rotatably unlocked relative to the second portion, friction between the first portion and the second portion rotating relative to each other, may be reduced.

According to an embodiment of the present invention, the arrangement further comprises a locking member, in particular at least one pin, for rotatably locking the first portion and the second portion relative to each other to achieve a state, in which the first portion and the second portion are rotatably locked relative to each other.

The pin may in particular be inserted into a hole in the first portion, wherein the pin is inserted in a direction parallel to a rotation axis of the rotation shaft, at which the rotor blades are connected at the hub. Alternatively, the pin may extend or may be inserted into the first portion in a radial direction or in plural radial directions. The pin may in particular be movable (in a hole in the first portion and/or the second portion) along a longitudinal axis of the pin. Thereby, locking/unlocking of the first portion relative to the second portion may be achieved in a simple manner.

The pin may in particular comprise or may be made of a metal.

According to an embodiment of the present invention, the first portion and the second portion are rotatably lockable relative to each other in a plurality of discrete angular positions.

In particular, the first portion may comprise a plurality of holes, into which one or more pin(s) are insertable for rotatably locking the first portion and the second portion. In particular, the first portion may be arranged in a rotatably locked state in two, three, four, five, six or even more angular positions relative to the second portion. Thereby, the method may be simplified.

According to an embodiment of the present invention, the arrangement further comprises a locking/unlocking mechanism including a hydraulic/electric actuator for rotatably locking/unlocking the first portion and the second portion relative to each other.

By using the hydraulic/electric actuator, a force may be applied, in particular to the one or more pins, which is greater than the force, which may be generated by a human person. Further, the locking/unlocking mechanism may be controlled by a remote control, in particular wire-based and/or wireless for controlling an operation of the locking/unlocking mechanism.

The arrangement may further comprise a wire, which is attached or which is attachable to the first force application region and/or the second force application region and which may be drawn (in particular vertically downwards) by a suitable apparatus, which may be installed at a ground.

Embodiments of the present invention are now described with reference to the accompanying drawings. The invention is not restricted or limited to the illustrated or described embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief description of the drawings

- Fig. 1: schematically illustrates an arrangement according to an embodiment of the present invention performing a method step for installing a rotor blade according to an embodiment of the present invention;
- Fig. 2: schematically illustrates a lever of an arrangement for installing a rotor blade according to an embodiment of the present invention; and
- Figs. 3 to 13: schematically illustrate method steps of a method for installing three rotor blades according to an embodiment of the present invention.

### Detailed description

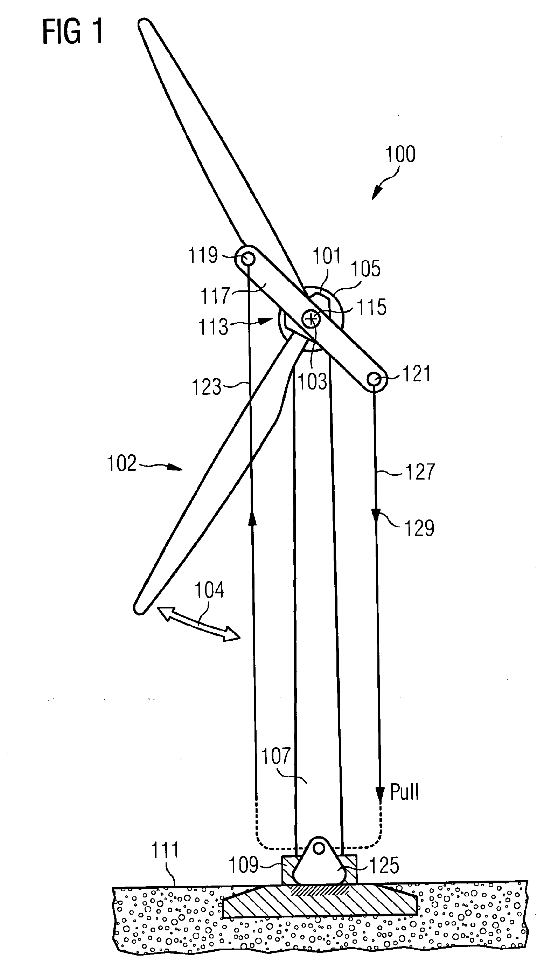

Fig. 1 schematically illustrates an arrangement for installing one or more rotor blades to a hub of a wind turbine 102, thereby also illustrating a method or method steps of a method for installing at least one rotor blade at a hub of a wind turbine.

In the overview 100 of an arrangement and a method for installing at least one rotor blade, rotor blades are to be installed at a hub 101 arranged at a front portion of a rotation shaft rotating around a rotation axis 103. The rotation shaft is rotatably supported within a nacelle 105, which is mounted on top of a wind turbine tower 107, which is installed at a foundation 109 at the ground 111 at a location on the earth.

A lever 113 is connected via a first portion 115 to the hub 101 by not illustrated screws. The lever 113 comprises besides the first portion 115 a second portion 117, wherein the first portion 115 is rotatably lockable and rotatably unlockable relative to the second portion 117.

The second portion 117 has a first force application region 119 and a second force application region 121. At the first force application region 119, a wire 123 is connected, which is led to a winch 125, which is installed at the foundation 109 at the ground 111.

At the second force application region 121 a wire 127 (which may be connected with or separate from the wire 123) is connected, which is also operable by the winch 125. In particular, the winch 125 may be operated such that the wire 127 applies a force (vertically downwards) as indicated by the arrow 129. By generating the force 129, the winch may, via the wire 127, apply a torque at the second portion 117 and in turn at the first portion 115 (when rotatably locked relative to the second portion), which is transferred to the hub 101 to rotate the hub 101 (in directions indicated by double arrow 104) relative to the nacelle to a predetermined angular position, when the first portion 115 of the lever 113 is rotatably locked relative to the second portion 117 of the lever 113.

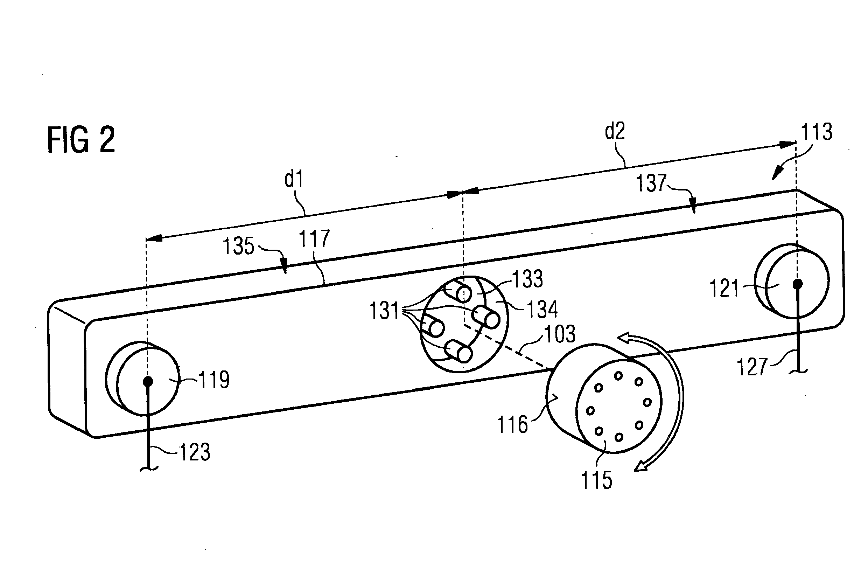

Fig. 2 schematically illustrates the lever 113 in a perspective view. In the illustration of Fig. 2, the first portion 115 is depicted separated from the second portion 117, in order to disclose locking members, here embodied as four pins 131, which protrude from a recess 133 in the second portion 117 of the lever 113 and which pins 131 may be received in corresponding holes of the first portion 115 in order to rotatably lock the first portion 115 relative to the second portion 117. The first portion 115 may be inserted into the recess 133 of the second portion for assembling the lever 113.

The pins 131 may be operated using a (not illustrated) hydraulic/electric actuator to withdraw them from the corresponding bores or holes within the first portion 115, such that the first portion 115 and the second portion 117 are rotatably unlocked relative to each other such that the second portion 117 may be turned without turning the first portion 115. Thereby a contact region 116 of the first portion slides along a contact region 134 of the second portion 117.

As can be seen from Fig. 2, the distance d1 between the recess 133 (or the first portion 115) of the lever 113 and the first application region 119 equals the distance d2 between the recess 133 and the second force application region 121. The distance d1 may amount to between 5 m and 20 m, for example.

Thereby, the second portion 117 comprises a first arm 135 and a second arm 137 (forming a bar), which have a same or at least similar length. Thereby, an appropriate torque may be achieved at the hub 101 of a wind turbine, when the lever 113 is connected to the hub and when either a force is applied at the first force application region 119 or the second force application region 121 and when the first portion 115 is rotatably locked relative to the second portion 117 comprising the first arm 135 and the second arm 137.

In particular, the second arm 135 may be considered as a counter-weight arm to simplify the installation method and to in particular counter-weight a gravitational force acted on the first arm 135.

The installation method and arrangement allows installing rotor blades without modifying the blade and without using additional methods like adding dummy weights to the hub. Turning or rotating the hub 101 may be performed in a very stable and secure and reliable manner. In particular, the weight of the counter-weight arms 135, 137 may be much lower than any kind of conventional dummy weight, as the counter-weight arms 135, 137 may only need to have a certain length d and a certain stiffness to transfer a necessary torque to the hub 101 of the wind turbine 102. In an embodiment of the present invention, the counter-weight arms 135, 137 each comprises an attachment point 119, 121 for applying a force. The centre of the lever 113 comprises a rotatable point (being embodied by the first portion 115) having one or more locking pins 131 for unlocking or locking the second portion 117 relative to the first portion 115.

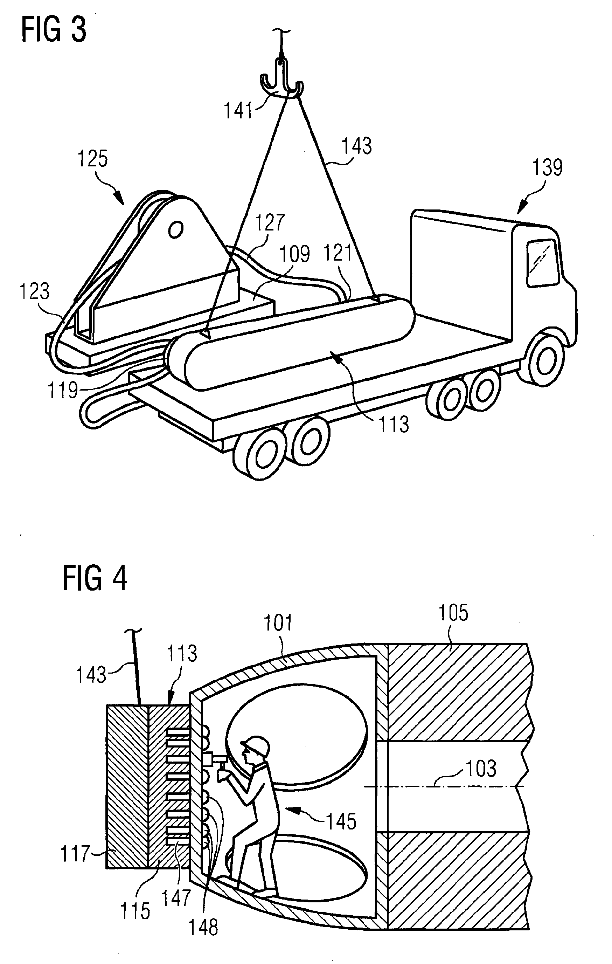

Figs. 3 to 13 schematically illustrate method steps of an installation method for installing three rotor blades to a hub of a wind turbine.

As a first method step illustrated in Fig. 3, at a mounting platform or foundation 109, a winch 125 is installed and a wire 123, 127 is installed at the winch 125 and is connected to force application regions 119, 121 of the lever 113, which is carried by a vehicle 139 and which is transported close to a base of a wind turbine tower, such as the wind turbine tower 107 illustrated in Fig. 1. Further, a crane hook 141 is drawing at a carrying wire 143, in order to lift the lever 113 from the transport area of the vehicle 139 upwards to the hub 101, at which the lever 113 is connected, as is illustrated in Fig. 4. Thereby, a technician 145 inserts screws 148 from inside the hub 101 into predetermined (e.g. threaded) holes 147 within the first portion 115 of the lever 113.

In this situation, the hub 101 may be rotatably locked relative to the nacelle 105. Then, the lifting arrangement, i.e. the carrying wire 143, may be removed from the lever 113. In particular, the lever 113 may be installed at the hub 101 in a horizontal orientation.

In particular, only the first portion 115 is screwed using screws 148 and the threaded holes 147 to the hub 101, while the second portion 117 may selectively rotatably locked or rotatably unlocked relative to the first portion 115.

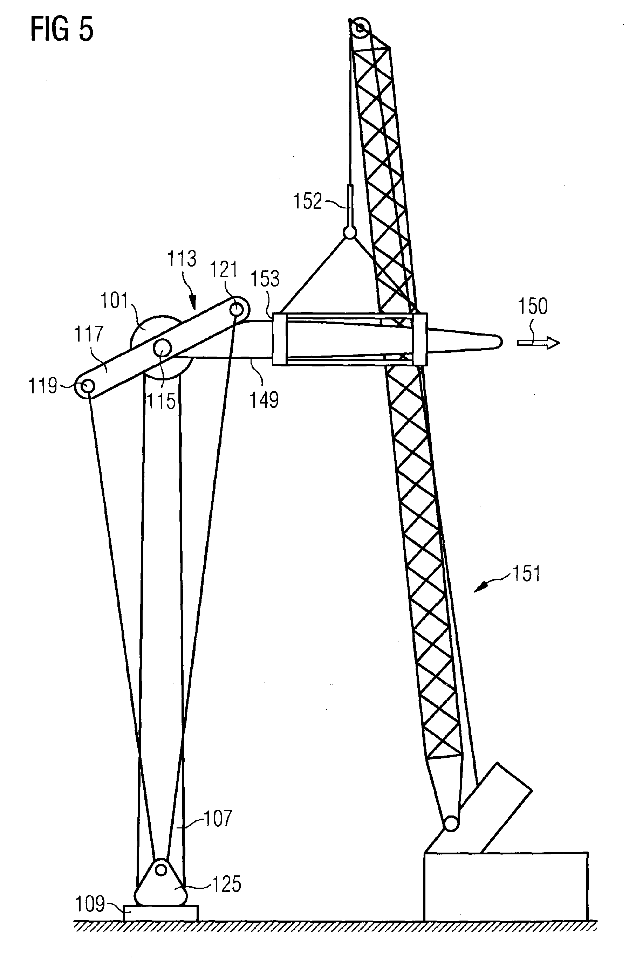

Then, as is illustrated in Fig. 5, the lever 113 is oriented to include an angle of 45° with the vertical direction by rotating the second portion 117 relative to the first portion 115, which is fixedly attached to the hub 101. Afterwards, a further rotor blade 149 is lifted by a crane 151 in a horizontal orientation and is connected to the hub being rotated at a further angular position. Thereby, in particular a clamp 153 is used to clamp the rotor blade 149 and lift it to a vertical position of the hub 101.

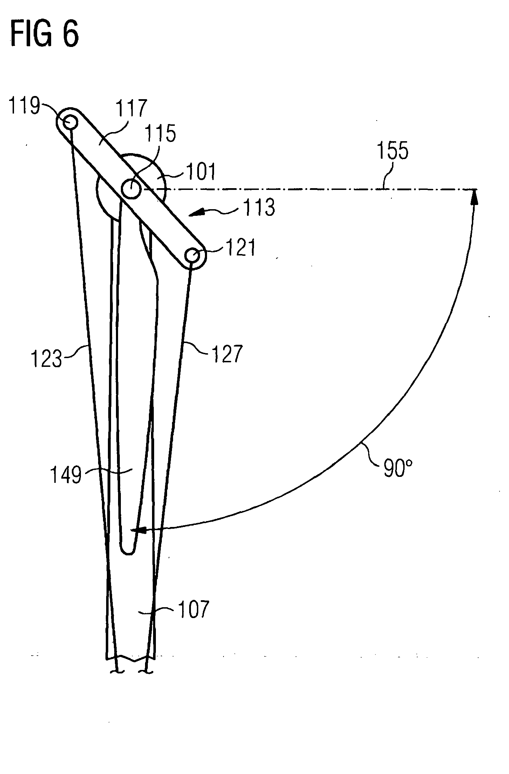

Afterwards, the hub 101 is rotatably unlocked relative to the nacelle 105, thus allowing rotation of the hub 101 relative to the nacelle 105. By using the winch 125 and applying a force to the wires 127, 123, the further blade 149 is rotated by 90° to reach a vertical orientation, in which the longitudinal axis of the rotor blade 149 is vertically arranged, as illustrated in Fig. 6.

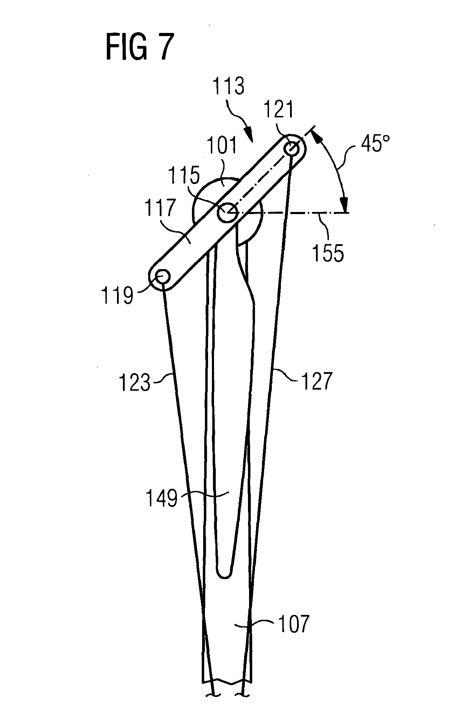

After this step, the first portion 115 is rotatably unlocked relative to the second portion 117, whereby a rotation of the second portion 117 relative to the first portion 115 is enabled without rotating the hub 101. In particular, as is illustrated in Fig. 7, the first portion 117 is rotated in an anti-clockwise manner relative to the first portion 115 and also relative to the hub 101 to reach a position as is illustrated in Fig. 7, wherein an angle of 45° is achieved relative to a horizontal direction 155. Thereby, the rotor blade 149 is maintained at the vertical orientation.

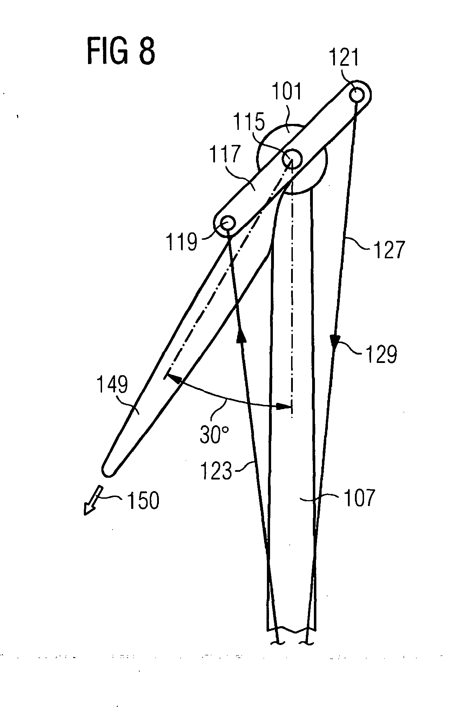

In this orientation of the second portion 117, the first portion 115 and the second portion 117 are locked relative to each other. Thereafter, as is illustrated in Fig. 8, a force 129 is applied at the second force application region 121 by the winch 125 via the wire 127 in order to turn the second portion 117 together with the first portion 115 and together with the hub 101 by 30° in a clockwise direction to eventually reach a configuration as illustrated in Fig. 8.

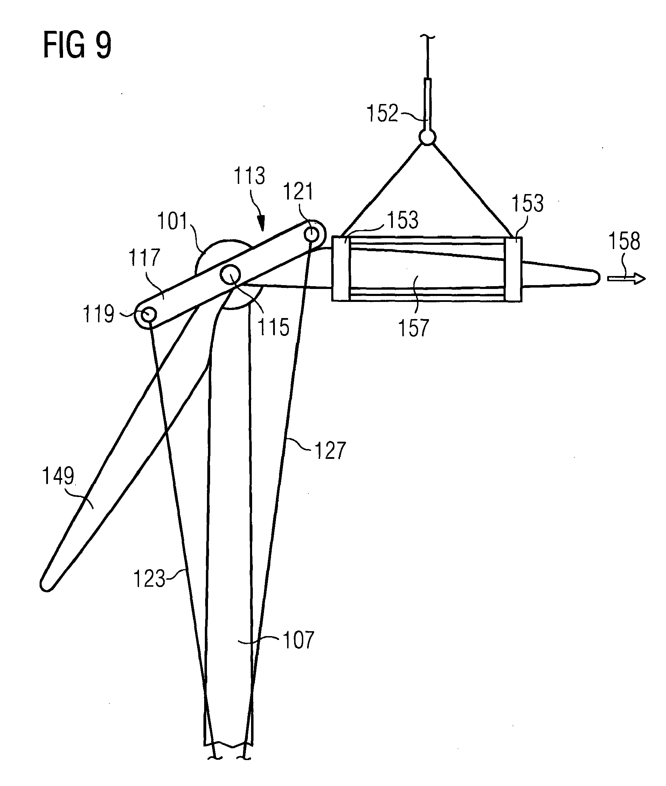

In this configuration, a rotor blade 157 (having longitudinal axis 158) is lifted towards the hub 101 and maintained at a horizontal orientation and mounted at the hub 101, as is illustrated in Fig. 9. Thereby, again a clamp 153 may be used to hold the rotor blade 157 and lift it up by a crane using a crane wire 152.

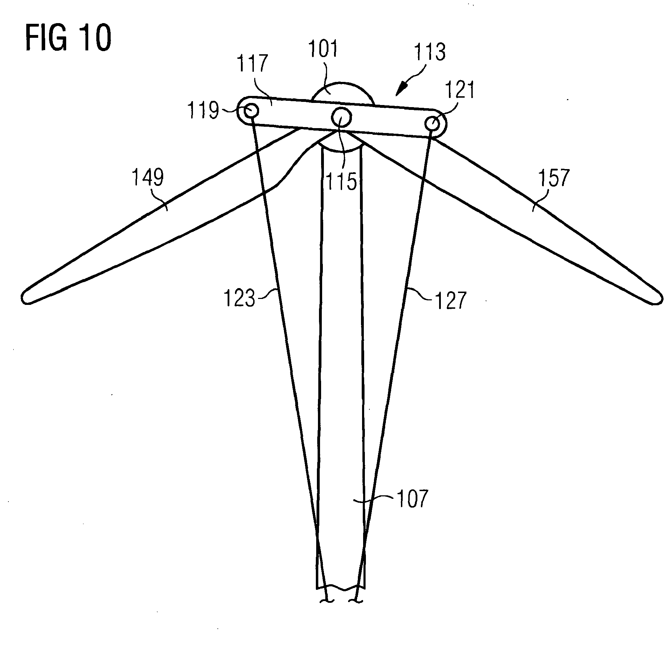

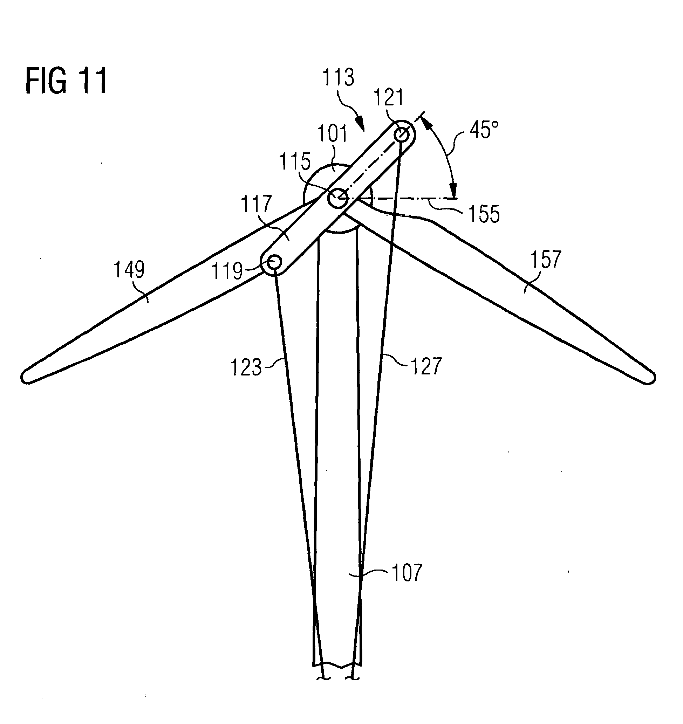

After this step, the rotor blade 157 and the further rotor blade 149 are rotated in a clockwise direction by 30° using appropriate forces applied to the wires 127, 123 using the winch 125 illustrated in Fig. 1. Thereby, the blades 157, 149 are balanced, as illustrated in Fig. 10. After that the first portion 115 is rotatably unlocked relative to the second portion 117 and the second portion 117 is rotated relative to the first portion 115 (and thus also relative to the hub 101) in an anti-clockwise direction such that the second portion 117 includes an angle of 45° with the horizontal direction 155, as is illustrated in Fig. 11.

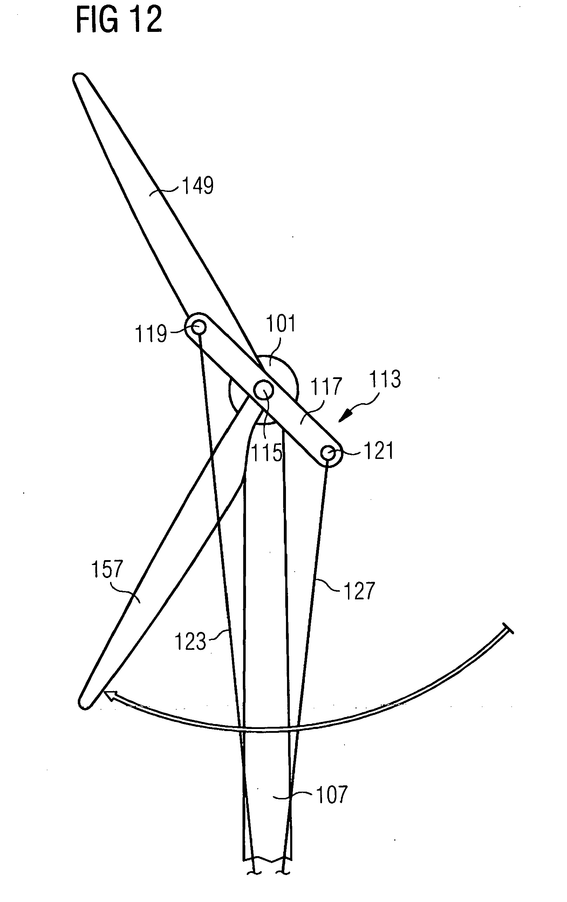

Afterwards, the first portion 115 and the second portion 117 are rotatably locked relative to each other. Thereafter, as is illustrated in Fig. 12, the lever 113 is rotated by applying appropriate forces or torque to the wires 123, 127 and the first force application region 119 and/or the second force application region 121 in a clockwise direction by 90°. Thereby, the configuration as illustrated in Fig. 12 is achieved.

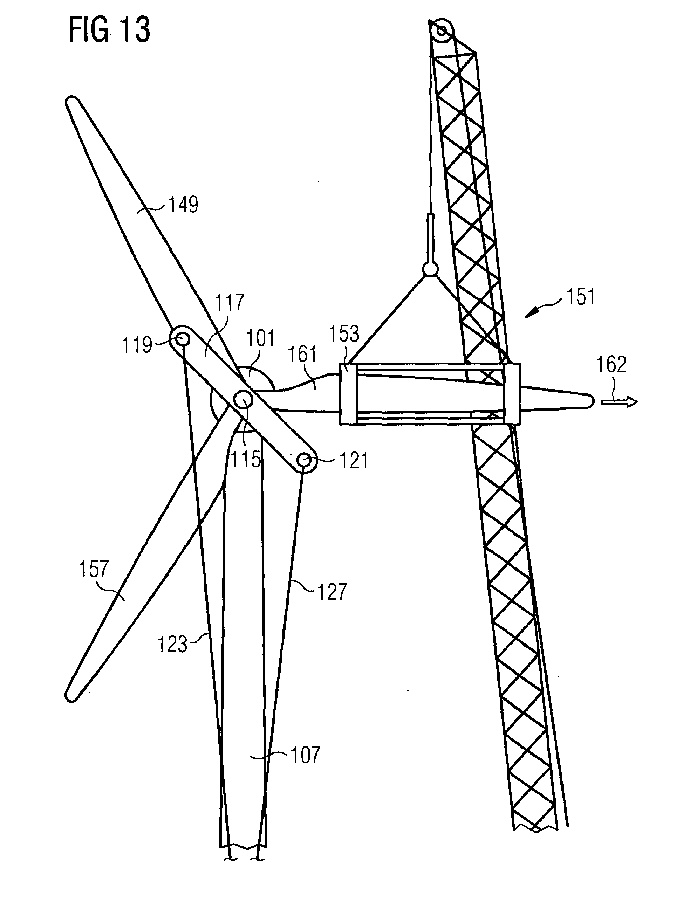

Thereafter, the other rotor blade 161 is lifted using the crane 151 (using the clamp 153 and connect it to the hub 101 being oriented in the other angular position), as is illustrated in Fig. 13.

Afterwards, i.e. after installation of the last rotor blade 161, the first portion 115 and the second portion 117 are rotatably unlocked relative to each other and the second portion 117 is brought in a horizontal orientation. Then, lifting cables or carrying wires are attached to the lever 113 and the lever is removed from the hub 101 and lower to the ground or to a vehicle.

Thereby, the installation method is finished.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for installing at least one rotor blade at a hub of a wind turbine, the method comprising:
attaching a lever (113) having a first portion (115) and a second portion (117) at the hub (101) by connecting the first portion (115) to the hub (101), the second portion (117) having a first force application region (119) and a second force application region (121);
rotatably locking the first portion and the second portion;
applying a force (129) at the first force application region (119) or the second force application region (121) of the second portion of the lever (113), to rotate the hub (101) into an angular position;
connecting the rotor blade (149, 157, 161) at the hub (101) rotated into the angular position.

2. Method according to claim 1, wherein the first portion (115) is arranged between the first force application region (119) and the second force application region (121), wherein in particular a distance (d1) between the first portion (115) and the first force application region (119) equals a distance (d2) between the first portion (115) and the second force application region (121).

3. Method according to claim 1 or 2, wherein by drawing, in particular vertically downwards, at a wire (123, 127) attached to the first force application region and/or the second force application region, in particular using a winch (125) arranged at a base at a ground
the force (129) is applied and/or
the second portion (117) is rotated relative to the first portion (115), without rotating the hub, when the first portion and the second portion are rotatably unlocked relative to each other and/or
the first portion (115) and the second portion (117) are commonly rotated together with the hub (101), when the first portion and the second portion are rotatably locked relative to each other.

4. Method according to one of the preceding claims, further comprising:
rotatably unlocking the first portion and the second portion;
rotating the second portion relative to the first portion and relative to the hub;
rotatably locking the first portion and the second portion;
applying another force at the second portion of the lever, to rotate the hub into another angular position;
connecting another rotor blade (161) at the hub rotated into the other angular position.

5. Method according to one of the preceding claims, further comprising
in particular locking the hub relative a nacelle; connecting a further rotor blade (149) at the hub (101) rotated into a further angular position;
rotatably locking the first portion and the second portion;
applying a further force at the second portion of the lever, to rotate the hub into an intermediate angular position;
rotatably unlocking the first portion and the second portion;
rotating the second portion relative to the first portion and relative to the hub;
in particular rotatably locking the first portion and the second portion.

6. Method according to one of the preceding claims, wherein a longitudinal axis (150, 158, 162) of the blade (149, 157, 161), the other blade and/or the further blade is horizontally (155) arranged when connecting the blade, the other blade and/or the further blade to hub.

7. Arrangement for installing at least one rotor blade at a hub of a wind turbine, the arrangement comprising:
a lever (113) having a first portion (115) and a second portion (117), wherein the first portion is connectable to the hub (101), wherein the first portion (115) is selectively rotatably lockable and rotatably unlockable relative to the second portion (117), the second portion (117) having a first force application region (119) and a second force application region (121),
wherein the first force application region (119) and the second force application region (121) of the second portion (117) of the lever (113) are adapted for applying a force at the lever, when the first portion is rotatably locked relative to the second portion, to rotate the hub into an angular position.

8. Arrangement according to claim 7,
wherein the second portion comprises a bar (135, 137) between the first force application region and the second force application region, the bar having a length (d1, d2) between 1 m and 50 m, further in particular between 2 m and 40 m.

9. Arrangement according to one of claims 7 or 8,
wherein the first portion (115) comprises a first contact region (116),
wherein the second portion (117) comprises a second contact region (134) between the first force application region and the second force application region, wherein the first contact region is in contact with the second contact region.

10. Arrangement according to claim 9, wherein the first contact region (116) and the second contact region (134) form a pivot bearing.

11. Arrangement according to one of claims 7 to 10, further comprising a locking member, in particular at least one pin (131), for rotatably locking the first portion and the second portion relative to each other.

12. Arrangement according to one of claims 7 to 11, wherein the first portion and the second portion are rotatably lockable relative to each other in a plurality of discrete angular positions.

13. Arrangement according to one of claims 7 to 12, further comprising
a locking/unlocking mechanism including a hydraulic/electric actuator for rotatalby locking/unlocking the first portion and the second portion relative to each other.

14. Arrangement according to claim 13, further comprising:
a remote control to control, in particular wire based and/or wireless, an operation of the locking/unlocking mechanism.

## Patentansprüche

1. Verfahren zum Montieren mindestens eines Rotorblatts an einer Nabe einer Windenergieanlage, welches Folgendes umfasst:
Anbringen eines Hebels (113) mit einem ersten Abschnitt (115) und einem zweiten Abschnitt (117) an der Nabe (101) durch Anfügen des ersten Abschnitts (115) an die Nabe (101), wobei der zweite Abschnitt (117) einen ersten Kraftanwendungsbereich (119) und einen zweiten Kraftanwendungsbereich (121) aufweist,
Drehverriegeln des ersten mit dem zweiten Abschnitt,
Anwenden einer Kraft (129) am ersten Kraftanwendungsbereich (119) oder am zweiten Kraftanwendungsbereich (121) des zweiten Abschnitts des Hebels (113) zum Drehen der Nabe (101) in eine Winkelposition,
Anfügen des Rotorblatts (149, 157, 161) an die in die Winkelposition gedrehte Nabe (101).

2. Verfahren nach Anspruch 1, bei dem der erste Abschnitt (115) zwischen dem ersten Kraftanwendungsbereich (119) und dem zweiten Kraftanwendungsbereich (121) angeordnet ist, wobei insbesondere ein Abstand (d1) zwischen dem ersten Abschnitt (115) und dem ersten Kraftanwendungsbereich (119) einem Abstand (d2) zwischen dem ersten Abschnitt (115) und dem zweiten Kraftanwendungsbereich (121) gleicht.

3. Verfahren nach Anspruch 1 oder 2, bei dem durch insbesondere senkrecht nach unten erfolgendes Ziehen an einem am ersten und/ oder am zweiten Kraftanwendungsbereich angebrachten Draht (123, 127) insbesondere unter Verwendung einer an einem Sockel am Boden angeordneten Winde (125)
die Kraft (129) angewendet wird und/ oder
der zweite Abschnitt (117) in Bezug auf den ersten Abschnitt (115) gedreht wird, ohne dass sich die Nabe dreht, wenn der erste von dem zweiten Abschnitt drehentriegelt ist, und/ oder
der erste Abschnitt (115) und der zweite Abschnitt (117) normalerweise gemeinsam mit der Nabe (101) gedreht werden, wenn der erste mit dem zweiten Abschnitt drehverriegelt ist.

4. Verfahren nach einem der vorhergehenden Ansprüche, das ferner Folgendes umfasst:
Drehentriegeln des ersten von dem zweiten Abschnitt,
Drehen des zweiten Abschnitts in Bezug zu dem ersten Abschnitt und der Nabe,
Drehverriegeln des ersten mit dem zweiten Abschnitt,
Anwenden einer anderen Kraft an dem zweiten Abschnitt des Hebels zum Drehen der Nabe in eine andere Winkelposition,
Anfügen eines weiteren Rotorblatts (161) an die in die andere Winkelposition gedrehte Nabe.

5. Verfahren nach einem der vorhergehenden Ansprüche, das ferner Folgendes umfasst:
insbesondere das Verriegeln der Nabe in Bezug auf eine Gondel,
Anfügen eines weiteren Rotorblatts (149) an die in eine weitere Winkelposition gedrehte Nabe (101),
Drehverriegeln des ersten mit dem zweiten Abschnitt,
Anwenden einer weiteren Kraft an dem zweiten Abschnitt des Hebels zum Drehen der Nabe in eine Zwischenwinkelposition,
Drehentriegeln des ersten von dem zweiten Abschnitt,
Drehen des zweiten Abschnitts in Bezug zu dem ersten Abschnitt und der Nabe,
insbesondere Drehverriegeln des ersten mit dem zweiten Abschnitt.

6. Verfahren nach einem der vorhergehenden Ansprüche, bei dem eine Längsachse (150, 158, 162) des Blatts (149, 157, 161), des anderen Blatts und/ oder des weiteren Blatts horizontal (155) angeordnet ist, wenn das Blatt, das andere Blatt und/ oder das weitere Blatt an die Nabe angefügt wird.

7. Anordnung zum Montieren mindestens eines Rotorblatts an einer Nabe einer Windenergieanlage, wobei die Anordnung Folgendes umfasst:
einen Hebel (113) mit einem ersten Abschnitt (115) und
einem zweiten Abschnitt (117), wobei sich der erste Abschnitt an die Nabe (101) anfügen lässt, wobei sich der erste Abschnitt (115) mit beziehungsweise von dem zweiten Abschnitt (117) gezielt drehverriegeln und drehentriegeln lässt, wobei der zweite Abschnitt (117) einen ersten Kraftanwendungsbereich (119) und einen zweiten Kraftanwendungsbereich (121) aufweist,
wobei der erste Kraftanwendungsbereich (119) und der zweite Kraftanwendungsbereich (121) des zweiten Abschnitts (117) des Hebels (113) für das Anwenden einer Kraft an dem Hebel zum Drehen der Nabe in eine Winkelposition ausgelegt sind, wenn der erste Abschnitt mit dem zweiten Abschnitt drehverriegelt ist.

8. Anordnung nach Anspruch 7,
bei der der zweite Abschnitt zwischen dem ersten und dem zweiten Kraftanwendungsbereich einen Stab (135, 137) umfasst, der eine Länge (d1, d2) zwischen 1 m und 50 m, ferner insbesondere zwischen 2 m und 40 m, aufweist.

9. Anordnung nach Anspruch 7 oder 8,
bei der der erste Abschnitt (115) einen ersten Kontaktbereich (116) umfasst,
bei der der zweite Abschnitt (117) zwischen dem ersten und dem zweiten Kraftanwendungsbereich einen zweiten Kontaktbereich (134) umfasst, wobei der erste Kontaktbereich den zweiten Kontaktbereich berührt.

10. Anordnung nach Anspruch 9, bei der der erste Kontaktbereich (116) und der zweite Kontaktbereich (134) ein Zapfenlager bilden.

11. Anordnung nach einem der Ansprüche 7 bis 10, die ferner ein Verriegelungselement, insbesondere mindestens einen Stift (131), zum Drehverriegeln des ersten mit dem zweiten Abschnitt umfasst.

12. Anordnung nach einem der Ansprüche 7 bis 11, bei der sich der erste und der zweite Abschnitt in mehreren diskreten Winkelpositionen miteinander drehverriegeln lassen.

13. Anordnung nach einem der Ansprüche 7 bis 12, die ferner Folgendes umfasst:
einen Verriegelungs-/ Entriegelungsmechanismus mit einem hydraulischen/ elektrischen Stellglied zum Drehverriegeln/ Drehentriegeln des ersten mit/ von dem zweiten Abschnitt.

14. Anordnung nach Anspruch 13, die ferner Folgendes umfasst:
eine Fernsteuereinrichtung zum insbesondere drahtgebundenen und/ oder drahtlosen Steuern eines Betriebs des Verriegelungs-/ Entriegelungsmechanismus.

## Revendications

1. Procédé destiné à installer au moins une pale de rotor sur un moyeu d'une éolienne, le procédé consistant à :
fixer un levier (113) présentant une première partie (115) et une seconde partie (117) sur le moyeu (101) en reliant la première partie (115) au moyeu (101), la seconde partie (117) présentant une première zone d'application de force (119) et une seconde zone d'application de force (121) ;
bloquer en rotation la première partie et la seconde partie ;
appliquer une force (129) sur la première zone d'application de force (119) ou la seconde zone d'application de force (121) de la seconde partie du levier (113), afin de faire tourner le moyeu (101) dans une position angulaire ;
relier la pale de rotor (149, 157, 161) sur le moyeu (101) tourné dans la position angulaire.

2. Procédé selon la revendication 1, dans lequel la première partie (115) est agencée entre la première zone d'application de force (119) et la seconde zone d'application de force (121), dans lequel en particulier une distance (dl) entre la première partie (115) et la première zone d'application de force (119) est égale à une distance (d2) entre la première partie (115) et la seconde zone d'application de force (121).

3. Procédé selon la revendication 1 ou 2, dans lequel, par étirage, en particulier verticalement vers le bas, sur un câble (123, 127) fixé à la première zone d'application de force et/ou la seconde zone d'application de force, en particulier au moyen d'un treuil (125) agencé sur une base sur un sol,
la force (129) est appliquée et/ou
la seconde partie (117) est tournée par rapport à la première partie (115), sans faire tourner le moyeu, lorsque la première partie et la seconde partie sont débloquées en rotation l'une par rapport à l'autre et/ou la première partie (115) et la seconde partie (117) sont conjointement tournées avec le moyeu (101), lorsque la première partie et la seconde partie sont bloquées en rotation l'une par rapport à l'autre.

4. Procédé selon l'une des revendications précédentes, consistant en outre à :
débloquer en rotation la première partie et la seconde partie ;
faire tourner la seconde partie par rapport à la première partie et par rapport au moyeu ;
bloquer en rotation la première partie et la seconde partie ;
appliquer une autre force sur la seconde partie du levier,
afin de faire tourner le moyeu dans une autre position angulaire ;
relier une autre pale de rotor (161) sur le moyeu tourné dans l'autre position angulaire.

5. Procédé selon l'une des revendications précédentes, consistant en outre à :
bloquer en particulier le moyeu par rapport à une nacelle ;
relier encore une autre pale de rotor (149) sur le moyeu (101) tourné dans encore une autre position angulaire ;
bloquer en rotation la première partie et la seconde partie ;
appliquer encore une autre force sur la seconde partie du levier, afin de faire tourner le moyeu dans une position angulaire intermédiaire ;
débloquer en rotation la première partie et la seconde partie ;
faire tourner la seconde partie par rapport à la première partie et par rapport au moyeu ;
en particulier bloquer en rotation la première partie et la seconde partie.

6. Procédé selon l'une des revendications précédentes, dans lequel un axe longitudinal (150, 158, 162) de la pale (149, 157, 161), de l'autre pale et/ou encore de l'autre pale est agencé horizontalement (155) lors de la liaison de la pale, l'autre pale et/ou encore l'autre pale au moyeu.

7. Agencement destiné à installer au moins une pale de rotor sur un moyeu d'une éolienne, l'agencement comprenant :
un levier (113) présentant une première partie (115) et
une seconde partie (117), la première partie pouvant être reliée au moyeu (101), la première partie (115) pouvant etre sélectivement bloquée en rotation et débloquée en rotation par rapport à la seconde partie (117), la seconde partie (117) présentant une première zone d'application de force (119) et une seconde zone d'application de force (121),
dans lequel la première zone d'application de force (119) et la seconde zone d'application de force (121) de la seconde partie (117) du levier (113) sont adaptées pour appliquer une force sur le levier, lorsque la première partie est bloquée en rotation par rapport à la seconde partie, afin de faire tourner le moyeu dans une position angulaire.

8. Agencement selon la revendication 7,
dans lequel la seconde partie comprend une barre (135, 137) entre la première zone d'application de force et la seconde zone d'application de force, la barre présentant une longueur (d1, d2) comprise entre 1 m et 50 m, plus particulièrement entre 2 m et 40 m.

9. Agencement selon l'une des revendications 7 ou 8, dans lequel la première partie (115) comprend une première zone de contact (116),
dans lequel la seconde partie (117) comprend une seconde zone de contact (134) entre la première zone d'application de force et la seconde zone d'application de force, la première zone de contact étant en contact avec la seconde zone de contact.

10. Agencement selon la revendication 9, dans lequel la première zone de contact (116) et la seconde zone de contact (134) forment une crapaudine.

11. Agencement selon l'une des revendications 7 à 10, comprenant en outre un élément de blocage, en particulier au moins une goupille (131), pour bloquer en rotation la première partie et la seconde partie l'une par rapport à l'autre.

12. Agencement selon l'une des revendications 7 à 11, dans lequel la première partie et la seconde partie peuvent etre bloquées en rotation l'une par rapport à l'autre dans une pluralité de positions angulaires discrètes.

13. Agencement selon l'une des revendications 7 à 12, comprenant en outre :
un mécanisme de blocage/déblocage comprenant un actionneur hydraulique/électrique pour bloquer/débloquer en rotation la première partie et la seconde partie l'une par rapport à l'autre.

14. Agencement selon la revendication 13, comprenant en outre :
une commande à distance afin de commander, en particulier de manière filaire et/ou sans fil, un fonctionnement du mécanisme de blocage/déblocage.
